# EUROPÄISCHE PATENTSCHRIFT

(11) **EP 2 775 114 B1**
(45) Veröffentlichungstag und Bekanntmachung des Hinweises auf die Patenterteilung: **20.01.2016**
(21) Anmeldenummer: 14156625.7
(22) Anmeldetag: 25.02.2014
(51) Int. Cl.: F01N 3/28

(54) **Einströmkammer für einen Katalysator einer Abgasreinigungsanlage**
Inflow chamber for a catalytic converter of an emission control system
Chambre d'entrée pour un pot catalytique d`un système de purification de gaz d'échappement

(30) Priorität: 08.03.2013 DE 102013004123; 25.03.2013 DE 102013005206
(43) Veröffentlichungstag der Anmeldung: 10.09.2014
(73) Patentinhaber: Eberspächer Exhaust Technology GmbH & Co. KG, 66539 Neunkirchen (DE)
(72) Erfinder: Wang, Kanqiu, 58730 Fröndenberg (DE); Vogels, Dirk, 44319 Dortmund (DE); Gerlach, Ralf, 44289 Dortmund (DE); Schulz, Achim, 44287 Dortmund (DE); Wolf, Tobias, 73257 Köngen (DE)
(74) Vertreter: Diehl & Partner GbR

(56) Entgegenhaltungen:
- EP-A1- 2 325 452
- EP-A1- 2 607 641
- DE-A1- 4 203 807
- DE-A1-102004 043 931
- DE-A1-102008 031 136

## Beschreibung

Die vorliegende Erfindung betrifft eine Abgasreinigungseinrichtung für Kraftfahrzeuge, bei welcher für die Reinigung des Abgases ein flüssiges Reduktionsmittel verwendet wird. Genauer gesagt betrifft die vorliegende Erfindung eine Einströmkammer für einen SCR-Katalysator (SCR = selective catalytic reduction = Selektive katalytische Reduktion) einer Abgasreinigungsanlage.

Im Abgas von Feuerungsanlagen, Müllverbrennungsanlagen, Gasturbinen, Industrieanlagen und Motoren sind häufig Stickoxide NO_{X} enthalten. Stickoxide treten bei der thermischen Verwertung von festen, gasförmigen und flüssigen natürlichen und fossilen Brennstoffen wie beispielsweise Kohle, Gas, Öl und Holz auf. Stickoxide sind insbesondere im Abgas von Verbrennungsmotoren für Kraftfahrzeuge und Nutzfahrzeuge enthalten. Besonders hoch ist der Anteil von Stickoxiden im Abgas von dieselbetriebenen Verbrennungsmotoren.

Stickoxide stehen im Verdacht, die menschlichen Atmungsorgane zu reizen oder zu schädigen (insbesondere Stickstoffdioxid NO₂). Weiter werden Stickoxide mit der Entstehung des "Sauren Regens" infolge der Bildung von Salpetersäure (HNO₃) durch die Reaktion von (2NO₂ + H₂O → HNO₃ + HNO₂) oder durch Aufnahme von N₂O₅ in Aerosolpartikel und nachfolgender Bildung von NO₃⁻ in flüssiger Phase in Verbindung gebracht. Weiter gelten Stickoxide unter Einfluss von UV-Strahlung als an der Bildung von Smog und Ozon O₃ beteiligt.

In der Folge werden verstärkt Anstrengungen unternommen, den Gehalt von Stickoxiden im Abgas zu reduzieren. Hierfür ist bekannt, ein ungiftiges Reduktionsmittel aus Wasser und Harnstoff CH₄N₂O präzise dosiert in den (noch heißen) Abgasstrom einzuspritzen. Es entsteht Ammoniak NH₃ und Kohlendioxid CO₂. Der Ammoniak reagiert mit den Stickoxiden des Abgases in einem der Einspritzung entlang des Abgasstroms nachgeschalteten SCR-Katalysator zu harmlosem Stickstoff N₂ und Wasser H₂O. Unter dem Markennamen AdBlue kann als Reduktionsmittel beispielsweise mit Wasser versetzter Harnstoff (32,5 %-ige wässrige Harnstofflösung) bezogen werden. Die Einspritzung des Reduktionsmittels kann dabei mit Druckluft vermischt oder direkt in flüssiger Form erfolgen. Die direkte Verwendung von Ammoniak als Reduktionsmittel anstelle von Harnstoff ist theoretisch möglich, aufgrund der ätzenden, umweltgefährdenden und giftigen Eigenschaft von Ammoniak jedoch problematisch.

Nachteilig an der Reinigung von Abgas mittels eines derartigen insbesondere flüssigen Reduktionsmittels ist neben der Tatsache, dass zusätzlich zum Brennstoff Reduktionsmittel bereitgestellt werden muss, dass das Reduktionsmittel zur Erzielung einer hohen NO_{X}-Reduktion im richtigen Verhältnis zur Stickoxidemission des Verbrennungsmotors dosiert wird. Dabei ist eine gute Durchmischung des zu reinigenden Abgases mit dem Reduktionsmittel erforderlich.

Aus der DE 10 2004 043 931.1 ist eine Abgasnachbehandlungseinrichtung für Dieselmotoren mit einem SCR-Katalysator bekannt, bei welcher vor dem SCR-Katalysator eine Mischkammer vorgesehen ist, in welche eine Reaktionsmitteldosiereinrichtung mündet. Dabei ist in der Mischeinrichtung ein gelochtes Abgasleitblech vorgesehen, welches zur Bildung einer Reaktionsstrecke mehrfach gebogen ist. Die Reaktionsmitteldosiereinrichtung ist am Beginn der Reaktionsstrecke angeordnet. Dabei erfolgt die Eindüsung des Reaktionsmittels koaxial zur Strömungsrichtung des zu reinigenden Abgases. Die Reaktionsstrecke verjüngt sich in Strömungsrichtung des zu reinigenden Abgases.

Aus den vorveröffentlichten Dokumenten DE 42 03 807 A1, DE 10 2008 031 136 A1 und EP 2 325 452 A1 sowie dem nachveröffentlichten Dokument mit älterem Zeitrang EP 2 607 641 A1 sind die Merkmale des Oberbegriffs des Anspruchs 1 bekannt

Es hat sich herausgestellt, dass die Durchmischung des zu reinigenden Abgases mit Reduktionsmittel bei bestehenden Systemen ungenügend ist.

Ausführungsformen der vorliegenden Erfindung sind darauf gerichtet, eine Einströmkammer für einen SCR-Katalysator bereitzustellen, welche eine gute Durchmischung des zu reinigenden Abgases mit Reduktionsmittel sicherstellt und gleichwohl einen kompakten Aufbau aufweist.

Die vorstehende Aufgabe wird durch die Kombination der Merkmale der unabhängigen Ansprüche gelöst. Vorteilhafte Ausgestaltungen finden sich in den Unteransprüchen.

Ausführungsformen einer Einströmkammer für einen Abgaskatalysator weisen ein zylindrisches Gehäuse mit einer Mantelfläche und zwei Stirnflächen und ein in dem zylindrischen Gehäuse angeordnetes Leitblech aus einem für Abgas undurchlässigen Material auf. Dabei sind die Mantelfläche des Gehäuses und eine erste Stirnfläche des Gehäuses aus einem Material gebildet, welches für Abgas undurchlässig ist, und ist eine zweite Stirnfläche ganz (d. h. über die ganze Fläche der zweiten Stirnfläche) oder partiell (d. h. nur über Bereiche der zweiten Stirnfläche) für Abgas durchlässig. Die Mantelfläche weist eine Einlassöffnung für mit Reduktionsmittel versetztes Abgas auf. Damit sind die erste Stirnfläche und die Mantelfläche über ihre jeweilige Fläche für das Abgas undurchlässig, mit Ausnahme der Einlassöffnung in der Mantelfläche. Die beiden Stirnflächen des Gehäuses sind entlang einer Längsachse des Gehäuses gegenüberliegend angeordnet. Das Leitblech erstreckt sich entlang seiner Querrichtung von der zweiten Stirnfläche des Gehäuses hin zu der ersten Stirnfläche des Gehäuses. Entlang seiner Längsrichtung weist das Leitblech einen Konusabschnitt auf, in dem es die Mantelfläche eines Kegelstumpfes bildet, dessen Deckfläche der ersten Stirnfläche des Gehäuses zugewandt ist, und der sich in Umfangsrichtung des Gehäuses über wenigstens 90° und insbesondere über wenigstens 135° und weiter insbesondere über mehr als 180° erstreckt. Dabei erstreckt sich der Konusabschnitt des Leitblechs in Umfangsrichtung des Gehäuses über weniger als 330° und insbesondere über weniger als 300° und weiter insbesondere über weniger als 270°, um am Ende des Konusabschnitts des Leitblechs ein Strömen des mit Reduktionsmittel versetzten Abgases in radialer Richtung in das Innere des von dem Leitblech umschlossenen Raumes zu ermöglichen.

Gemäß einer Ausführungsform weist das Leitblech insgesamt die Form eines Spiralkonusstumpfes auf, bei dem achsensenkrechte Schnitte jeweils Spiralen sind.

Gemäß einer Ausführungsform verläuft die Längsachse des der Mantelfläche des Konusabschnitts des Leitblechs zugehörigen Kegelstumpfes parallel und insbesondere koaxial zur Längsachse des Gehäuses.

Mit Reduktionsmittel versetztes Abgas strömt somit zunächst radial über die Einlassöffnung des Gehäuses in das Innere des Gehäuses ein und wird dort von dem Leitblech in eine Richtung quer zur Einströmrichtung in Umfangsrichtung des Gehäuses umgelenkt. Dieser Umfangsrichtung wird entlang des Konusabschnitts des Leitblechs über wenigstens 90° gefolgt, wobei aufgrund der konusförmigen Ausgestaltung des Leitblechs zwischen dem Leitblech und der ersten Stirnfläche des Gehäuses zudem eine Strömungskomponente in Längsrichtung (axialer Richtung) des Konus' und entlang der Längsachse des Gehäuses erzeugt wird. Diese Strömungskomponente kehrt sich für einen Austritt des Abgases entlang der Längsachse des Gehäuses über die zweite Stirnfläche um 180° um. Neben der durch das Leitblech hervorgerufenen Länge des für eine Vermischung des Reduktionsmittels mit dem Abgas zur Verfügung stehenden Strömungspfades führt diese Richtungs- und Strömungsumkehr des mit Reduktionsmittel versetzten Abgasstroms bei kompakter Bauform der Einströmkammer zu einer besonders gleichmäßigen Verteilung des Reduktionsmittels in dem Abgasstrom.

Gemäß einer Ausführungsform erstreckt sich die Querrichtung des Leitblechs im Bereich der Einlassöffnung des Gehäuses parallel zur Längsachse des Gehäuses.

Gemäß einer Ausführungsform sind das Gehäuse und das Leitblech aus Stahlblech und insbesondere aus Edelstahl gebildet.

Gemäß einer Ausführungsform weist das Leitblech in Längsrichtung einen Anfangsabschnitt auf, welcher benachbart zu der Einlassöffnung über die ganze Längsachse des Gehäuses an die Mantelfläche des Gehäuses angrenzt und insbesondere mit dieser verbunden ist. Somit erstreckt sich der Anfangsabschnitt des Leitblechs zwischen der ersten und zweiten Stirnfläche des Gehäuses. Auf diese Weise wird sichergestellt, dass das über die Einlassöffnung einströmende Abgas von dem Leitblech in genau eine vorbestimmte Umfangsrichtung umgelenkt wird. Weiter weist das Leitblech in Längsrichtung einen Endabschnitt auf, welcher sich unmittelbar an den Konusabschnitt anschließt, und bezogen auf eine Längsachse des Gehäuses radial in das Innere des Gehäuses hineinragt. An diesem Endabschnitt des Leitblechs erfolgt zunächst ein Strömungsabriss des entlang des Konusabschnitts des Leitblechs strömenden Abgases, welches zunächst weiter spiralförmig in das Gehäuseinnere strömt, bevor es nach 180° von der anderen Seite auf den Endabschnitt trifft, verwirbelt und weiter radial Richtung Längsachse des Gehäuses zu strömen gezwungen wird.

Gemäß einer Ausführungsform ist das freie Ende des Endabschnitts des Leitblechs parallel zur Längsachse des Gehäuses ausgebildet.

Gemäß einer Ausführungsform weist das Leitblech an der Stoßstelle zwischen dem Konusabschnitt und dem Endabschnitt einen Radius kleiner 20 mm und insbesondere kleiner 10 mm und weiter insbesondere kleiner 5 mm auf, um den Strömungsabriss zu begünstigen.

Gemäß einer Ausführungsform weist das Leitblech eine Hauptkrümmung auf, deren Vorzeichen sich in Längsrichtung des Leitblechs zwischen dem Anfangsabschnitt und dem Konusabschnitt ändert und zwischen dem Konusabschnitt und dem Endabschnitt gleich bleibt. Die Hauptkrümmung weist somit entlang der strömungstechnisch wirksamen Erstreckung des Leitblechs in Längsrichtung (und damit im Wesentlichen in Umfangsrichtung des Gehäuses) genau einen Vorzeichenwechsel auf.

Gemäß einer Ausführungsform ist die zweite Stirnfläche aus einer Ringscheibe aus einem für Abgas undurchlässigen Material gebildet. In der Folge ist ein störungsfreies Ausströmen des Abgases aus der Einströmkammer nur im Bereich der Öffnung der Ringscheibe entlang der Längsachse des Gehäuses möglich. Gemäß einer alternativen Ausführungsform ist die zweite Stirnseite offen, d.h. dort ist kein für Abgas undurchlässiges Material angeordnet.

Gemäß einer Ausführungsform ist die Ringscheibe für Abgas undurchlässig mit der Mantelfläche des Gehäuses verbunden.

Gemäß einer Ausführungsform ragt der Endabschnitt des Leitblechs radial über eine maximale Länge in das Innere des Gehäuses hinein, welche Länge sich um weniger als 10 % und insbesondere um weniger als 5 % und weiter insbesondere um weniger als 3 % von der Differenz zwischen Außendurchmesser und Innendurchmesser der Ringscheibe unterscheidet.

Gemäß einer Ausführungsform weist die Ringscheibe einen ersten (insbesondere zusammenhängenden) Abschnitt auf, der sich in Umfangsrichtung über wenigstens 90° und insbesondere über wenigstens 135° und weiter insbesondere über mehr als 180° erstreckt, und in dem eine Vielzahl von Löchern vorgesehen ist. Weiter weist die Ringscheibe wenigstens einen zweiten (insbesondere zusammenhängenden) Abschnitt auf, der sich in Umfangsrichtung über wenigstens 90° und insbesondere wenigstens 135° aber über weniger als 200° erstreckt, und in dem ebenfalls Löcher vorgesehen sein können. Dabei ist eine Dichte der Löcher im zweiten Abschnitt wenigstens 25 % und insbesondere wenigstens 40 % und weiter insbesondere wenigstens 60 % niedriger, als im ersten Abschnitt. Durch diese Anordnung der Löcher in der Ringscheibe kann eine besonders gute Ausrichtung und Homogenisierung des die Einströmkammer verlassenden Abgases erreicht werden.

Gemäß einer Ausführungsform ist der erste Abschnitt der Ringscheibe im Bereich des Konusabschnitts des Leitblechs angeordnet, und ist der zweite Abschnitt der Ringscheibe in einem Bereich des Gehäuses angeordnet, welcher frei von dem Leitblech ist.

Weiter weist jeder (zusammenhängende) erste und zweite Abschnitt gemäß einer Ausführungsform eine Mindestfläche auf, welche dem 8-fachen der von einem Loch der Ringscheibe im Durchschnitt eingenommenen Fläche entspricht.

Gemäß einer Ausführungsform beträgt die von den Löchern eingenommene Fläche insgesamt zwischen 4 % und 20 % und insbesondere zwischen 8 % und 16 % und weiter insbesondere 12 % der Oberfläche der Ringscheibe in Umfangsrichtung einschließlich der Löcher.

Gemäß einer Ausführungsform weisen die Löcher einen Durchmesser von zwischen 2 mm und 6 mm und insbesondere von zwischen 3 mm und 5 mm und weiter insbesondere von 4 mm auf.

Gemäß einer Ausführungsform weist die Ringscheibe einen Außendurchmesser von zwischen 220 mm und 300 mm und insbesondere von zwischen 240 mm und 280 mm und weiter insbesondere von 262 mm auf.

Gemäß einer Ausführungsform weist die Ringscheibe einen Innendurchmesser von zwischen 70 mm und 190 mm und insbesondere von zwischen 100 mm und 160 mm und weiter insbesondere von 135 mm auf.

Gemäß einer Ausführungsform ist die erste Stirnfläche des Gehäuses für Abgas undurchlässig mit der Mantelfläche des Gehäuses verbunden.

Gemäß einer Ausführungsform ist das Leitblech für Abgas undurchlässig an der ersten Stirnfläche des Gehäuses befestigt.

Gemäß einer Ausführungsform ist die Verbindung des Anfangsabschnitts des Leitblechs an der Mantelfläche des Gehäuses für Abgas undurchlässig.

Gemäß einer Ausführungsform ist das Leitblech für Abgas undurchlässig mit der zweiten Stirnfläche des Gehäuses verbunden.

Gemäß einer Ausführungsform ist das Leitblech in dem Konusabschnitt gegenüber einer Längsachse des Gehäuses um einen Winkel von wenigstens 5° und insbesondere von wenigstens 15° und weiter insbesondere um einen Winkel von wenigstens 25° geneigt. In der Folge prägt das Leitblech dem Abgasstrom eine entlang der Längsachse des Gehäuses hin zur ersten Stirnfläche orientierte Strömungskomponente ein.

Gemäß einer Ausführungsform weist die Einströmkammer weiter ein an der Mantelfläche des Gehäuses im Bereich der Einlassöffnung befestigtes Einlassrohr auf, dessen Längsachse auf der Längsachse des Gehäuses senkrecht steht. Weiter schneidet die Längsachse des Einlassrohrs das Leitblech unter einem Winkel von kleiner 90° und insbesondere von kleiner 80° und weiter insbesondere von kleiner 75°. Dabei schneidet die Längsachse des Einlassrohrs das Leitblech unter einem Winkel von größer 45° und insbesondere von größer 55° und weiter insbesondere von größer 60°. Somit kann der Winkel, unter dem die Längsachse des Einlassrohrs das Leitblech schneidet, in folgenden Bereichen liegen: 45°< Winkel <90°, 45°< Winkel <80°, 45°< Winkel <75°, 55°< Winkel <90°, 55°< Winkel <80°, 55°< Winkel <75°, 60°< Winkel <90°, 60°< Winkel <80°, 60°< Winkel <75°. Dieser Winkel kann insbesondere in einer Ebene gemessen werden, auf welcher die Längsachse des Gehäuses senkrecht steht, und in welcher die Längsachse des Einlassrohres liegt. In dem Einlassrohr ist eine Einspritzdüse für Reduktionsmittel angeordnet. Somit kann die Einspritzung des Reduktionsmittels in das zu reinigende Abgas unmittelbar vor der Einströmkammer erfolgen. Die vorstehende Orientierung des Einlassrohrs stellt sicher, dass das in dem Einlassrohr geführte, mit Reduktionsmittel versetzte Abgas unter einem stumpfen Winkel auf das Leitblech trifft. Soweit in dem Abgasstrom geführtes Reduktionsmittel noch nicht verdampft ist, sondern eine gewisse Tröpfchengröße übersteigt, dient das Leitblech daher als Prallfläche für die Reduktionsmitteltröpfchen. Die Tröpfchengröße ist von dem Winkel abhängig, den die Längsachse des Einlassrohres mit dem Leitblech einschließt. Auf diese Weise werden die Reduktionsmitteltröpfchen auf dem durch das Abgas geheizte Leitblech erhitzt und beim Aufprall verspritzt.

Gemäß einer alternativen Ausführungsform ist die Längsachse des an der Mantelfläche des Gehäuses im Bereich der Einlassöffnung befestigten Einlassrohres in einer Ebene angeordnet, auf der die Längsachse des Gehäuses senkrecht steht; somit muss die Längsachse des Einlassrohres die Längsachse des Gehäuses nicht schneiden. Weiter schneidet die Längsachse des Einlassrohres das Leitblech unter einem Winkel von kleiner 30° und insbesondere kleiner 20° und weiter insbesondere kleiner 10°. Dieser Winkel kann beispielsweise in der Ebene gemessen werden, auf welcher die Längsachse des Gehäuses senkrecht steht, und in welcher die Längsachse des Einlassrohres liegt.

Alternativ schneidet die Längsachse des Einlassrohres das Leitblech gar nicht. Dann kann die Längsachse des Einlassrohres beispielsweise tangential zum Leitblech angeordnet sein.

Die vorstehende alternative Orientierung des Einlassrohrs stellt sicher, dass das in dem Einlassrohr geführte, mit Reduktionsmittel versetzte Abgas unter einem spitzen Winkel und damit weitgehend tangential auf das Leitblech trifft, oder tangential am Leitblech vorbeigeführt wird. Hierdurch wird der Strömungswiderstand der Einströmkammer gering gehalten.

Gemäß einer Ausführungsform weist die Einspritzdüse wenigstens eine Düsenöffnung auf, welche radial zur Längsachse des Einlassrohres orientiert ist. Dabei bedeutet "radial zur Längsachse des Einlassrohres orientiert", dass die Düsenöffnung so orientiert ist, dass die Einspritzung von Reduktionsmittel überwiegend (d.h. zu mehr als 50%) in eine Richtung erfolgt, welche mit einer Ebene, auf welcher die Längsachse des Einlassrohres senkrecht steht, einen Winkel von kleiner 30° einschließt. Somit erfolgt die Einspritzung überwiegend nicht in Strömungsrichtung des Abgases, sondern überwiegend quer zur Strömungsrichtung. Soweit in den Abgasstrom eingespritztes Reduktionsmittel nicht sofort verdampft, sondern eine gewisse Tröpfchengröße übersteigt, trifft es bei dieser Orientierung der Düsenöffnung auf die Innenwand des durch das Abgas geheizten Einlassrohres, wird erhitzt und beim Aufprall verspritzt.

Gemäß einer alternativen Ausführungsform weist die Einspritzdüse wenigstens eine Düsenöffnung auf, welche in Richtung der Längsachse und insbesondere parallel oder koaxial zur Längsachse des Einlassrohres orientiert ist. Dabei bedeutet "in Richtung zur Längsachse des Einlassrohres orientiert", dass die Düsenöffnung so orientiert ist, dass die Einspritzung von Reduktionsmittel überwiegend (d.h. zu mehr als 50%) in eine Richtung erfolgt, welche mit einer Ebene, auf welcher die Längsachse des Einlassrohres senkrecht steht, einen Winkel von größer 60° einschließt.

Gemäß einer Ausführungsform beträgt eine Länge eines zwischen Leitblech und Gehäuse entlang des Anfangsabschnitts und des Konusabschnitts des Leitblechs gebildeten Strömungspfades in einer Ebene, welche senkrecht auf die Längsachse des Gehäuses 3 steht, und diese halbiert, zwischen 400 mm und 600 mm und insbesondere zwischen 450 mm und 550 mm und weiter insbesondere 480 mm. Dies hat sich angesichts der durch das Leitblech bewirkten mehrfachen Umlenkung der Strömungsrichtung des Abgases als für eine gleichmäßige Verteilung des Reduktionsmittels ausreichend erwiesen.

Gemäß einer Ausführungsform ist ein Querschnitt eines zwischen Leitblech und Gehäuse gebildeten Strömungspfades im Bereich des Anfangsabschnitts um zwischen 25 % und 55 % und insbesondere um zwischen 35 % und 45 % größer, als im Bereich des Konusabschnitts, so dass es zunächst zu einer Beschleunigung des mit Reduktionsmittel versetzten Abgases aufgrund eines Düseneffekts kommt.

Gemäß einer Ausführungsform ist ein Querschnitt eines zwischen Leitblech und Gehäuse gebildeten Strömungspfades im Bereich des Konusabschnitts im wesentlichen konstant.

Ausführungsformen einer Abgasreinigungsanlage für ein Kraftfahrzeug weisen die vorstehend beschriebene Einströmkammer und einen SCR-Katalysator auf. Dabei kann die Einlassöffnung des Gehäuses der Einströmkammer mit einem Verbrennungsmotor des Kraftfahrzeugs in Fluidverbindung gebracht werden. Weiter ist der SCR-Katalysator in Strömungsrichtung des Abgases benachbart hinter der Einströmkammer angeordnet. Bei einer solchen Anordnung stellt die Einströmkammer eine gute Ausrichtung und Homogenisierung des dem SCR-Katalysator zugeführten mit Reduktionsmittel versetzten Abgases sicher. Hierdurch kann eine nahezu vollständige Reduktion der Stickoxide im SCR-Katalysator erreicht werden.

Gemäß einer Ausführungsform weist der SCR-Katalysator eine zylindrische Form auf und ist so angeordnet, dass eine Längsachse des SCR-Katalysators mit einer Längsachse des Gehäuses fluchtet oder zu dieser parallel angeordnet und um weniger als 10 % des Durchmessers des SCR-Katalysators von dieser beabstandet ist. Dadurch ist sichergestellt, dass die Abgasströmung an der zweiten Stirnfläche des Gehäuses der Einströmkammer ohne weitere Umlenkung in den SCR-Katalysator eintreten kann.

Gemäß einer Ausführungsform ist der SCR-Katalysator um wenigstens 50 mm und insbesondere um wenigstens 70 mm und weiter insbesondere um 81 mm von der zweiten Stirnfläche des Gehäuses beabstandet. Hierdurch werden Strömungsturbulenzen, welche hinter der an der zweiten Stirnfläche des Gehäuses angeordneten Ringscheibe auftreten können, vermieden. Dieser Abstand zwischen dem SCR-Katalysator und der zweiten Stirnfläche des Gehäuses der Einströmkammer kann wahlweise durch das Gehäuse des SCR-Katalysators, das Gehäuse der Einströmkammer oder ein separates Bauteil überbrückt werden. Hieraus wird auch deutlich, dass sich das Gehäuse entlang seiner Längsachse über die zweite Stirnfläche hinaus erstrecken kann. Die zweite Stirnfläche des Gehäuses der Einströmkammer muss somit nicht zwingend an dem entlang der Längsachse des Gehäuses äußersten Ende angeordnet sein. Dies gilt auch für die erste Stirnfläche des Gehäuses der Einströmkammer.

Gemäß einer Ausführungsform unterscheidet sich der Radius des Konusabschnitts des Leitblechs der Einströmkammer an seiner Grundfläche um weniger als 10 % und insbesondere um weniger als 5 % von dem Radius des SCR-Katalysators. Hierdurch wird eine gute Anpassung der Einströmkammer an den SCR-Katalysator erreicht.

Gemäß einer Ausführungsform unterscheidet sich der Außendurchmesser der an der zweiten Stirnfläche des Gehäuses angeordneten Ringscheibe um weniger als 10 % und insbesondere um weniger als 5 % von dem Durchmesser des SCR-Katalysators.

Gemäß einer Ausführungsform unterscheidet sich der Innendurchmesser der Ringscheibe an der zweiten Stirnfläche des Gehäuses um weniger als 10 % und insbesondere um weniger als 5 % von dem Radius des SCR-Katalysators.

Auch hierdurch wird eine gute Anpassung der Einströmkammer an den SCR-Katalysator erreicht.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung eines Ausführungsbeispiels der Erfindung wird auf die beiliegenden Figuren Bezug genommen, von denen
- Figur 1: schematisch eine perspektivische Ansicht von schräg vorne auf eine Einströmkammer gemäß einer Ausführungsform zeigt, wobei die erste Stirnfläche des Gehäuses nicht und die Mantelfläche des Gehäuses transparent dargestellt ist;
- Figur 2: schematisch eine Aufsicht auf die Ringscheibe der Einströmkammer aus Figur 1 zeigt;
- Figur 3: schematisch eine teilweise freigeschnittene perspektivische Ansicht von schräg vorne auf die Einströmkammer aus Figur 1 zeigt, wobei die erste Stirnfläche des Gehäuses nicht dargestellt und die Mantelfläche des Gehäuses teilweise weggeschnitten ist;
- Figur 4: schematisch eine Aufsicht auf die erste Stirnfläche des Gehäuses in Form eines Querschnitts quer zur Längsachse durch die Einströmkammer aus Figur 1 zeigt;
- Figur 5: schematisch eine perspektivische Ansicht von schräg hinten auf die Einströmkammer aus Figur 1 zeigt, wobei die zweite Stirnfläche des Gehäuses nicht dargestellt ist und die Mantelfläche des Gehäuses sowie das Leitblech transparent dargestellt sind;
- Figur 6: schematisch eine perspektivische Ansicht von schräg hinten auf die Einströmkammer aus Figur 1 zeigt, wobei die Mantelfläche des Gehäuses sowie die Ringscheibe transparent dargestellt sind; und
- Figur 7: schematisch eine Querschnittsansicht durch eine Abgasreinigungsanlage zeigt, welche die Einströmkammer aus Figur 1 verwendet.

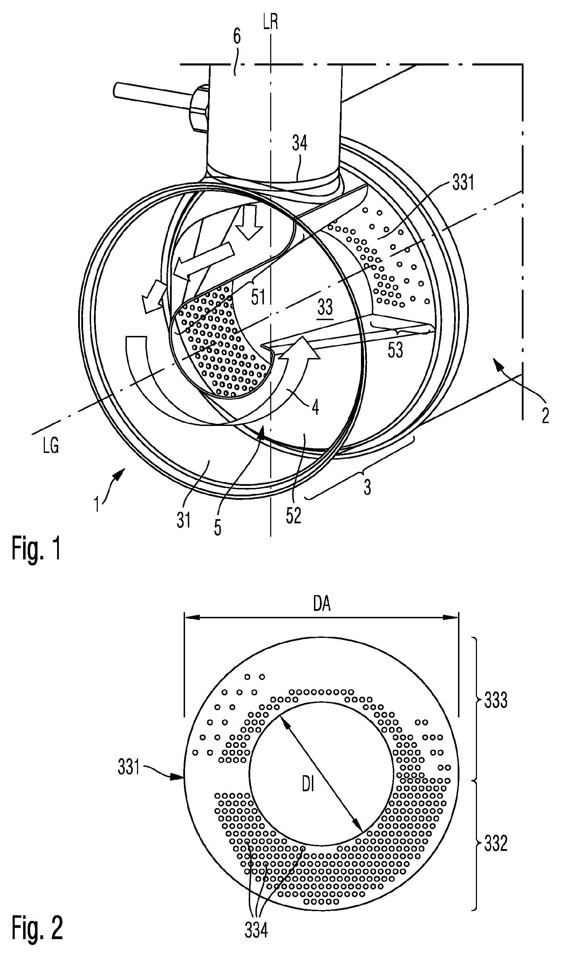

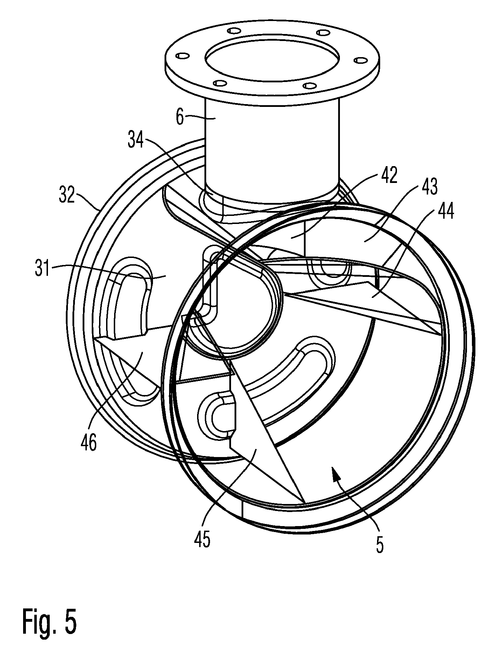

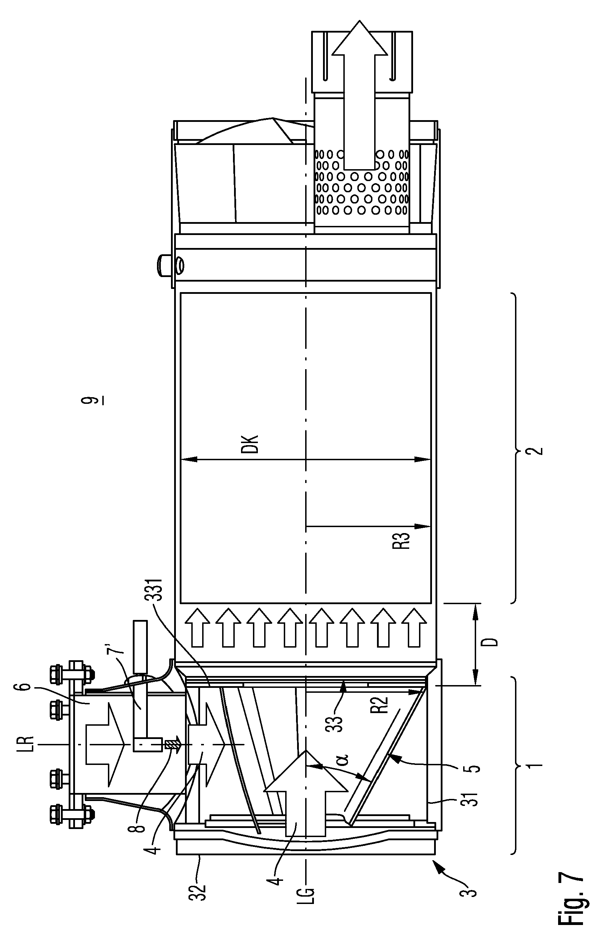

Im Folgenden wird unter Bezugnahme auf die Figuren 1 bis 6 eine Ausführungsform einer Einströmkammer 1 für einen Abgaskatalysator 2 beschrieben, der in einer beispielhaft in Figur 7 gezeigten Abgasreinigungsanlage 9 für ein Kraftfahrzeug verwendet werden kann.

Die Einströmkammer 1 weist ein im wesentlichen zylindrisches Gehäuse 3 mit einer Mantelfläche 31 und zwei Stirnflächen 32, 33 auf. Die Mantelfläche 31 und die erste Stirnfläche 32, welche in Figur 1 dem Betrachter zugewandt und nicht gezeigt ist, sind aus Edelstahl gebildet und gasdicht miteinander verschweißt. Bei der ersten Stirnfläche 32 handelt es sich in der gezeigten Ausführungsform um eine Abdeckkappe, die ebenso wie die Mantelfläche 31 des Gehäuses 3 als solches gasdicht ist. Die der ersten Stirnfläche 32 entlang einer Längsachse LG des Gehäuses 3 beabstandete zweite Stirnfläche 33 weist in der gezeigten Ausführungsform eine Ringscheibe 331 aus Edelstahl auf, die an ihrem äußeren Rand ebenfalls gasdicht mit der Mantelfläche 31 des Gehäuses 3 verschweißt ist. Die Ringscheibe 331 ist somit parallel zur ersten Stirnfläche 32 des Gehäuses 3 angeordnet.

Die Ringscheibe 331 weist einen Außendurchmesser DA von 262 mm auf, welcher dem Innendurchmesser der Mantelfläche 31 des Gehäuses 3 entspricht. Weiter weist die Ringscheibe einen Innendurchmesser DI von 135 mm auf. In die Ringscheibe 331 sind eine Vielzahl von Löchern 334 mit einem Durchmesser von 4 mm eingebracht, wobei die von den Löchern 334 insgesamt eingenommene Fläche 12 % der Oberfläche der Ringscheibe 331 (einschließlich Löcher 334) beträgt. Auf die Anordnung der Löcher 334 auf der Ringscheibe 331 wird später eingegangen werden. Es wird betont, dass die Ringscheibe 331 nicht auf diese Abmessungen beschränkt ist.

Es ist offensichtlich, dass die Ringscheibe 331 zwar aus einem gasdichten Material gebildet ist, als solches aber aufgrund der mittigen Öffnung nicht dazu geeignet ist, die zweite Stirnfläche 33 gasdicht zu verschließen. In der Folge ist die zweite Stirnfläche 33 für mit Reduktionsmittel 8 versetztes Abgas 4 in den Bereichen durchlässig, in denen die Ringscheibe 331 kein Material aufweist. Es wird betont, dass die Ringscheibe 331 nur optional ist. Die zweite Stirnfläche 33 des Gehäuses 3 kann somit alternativ auch offen sein.

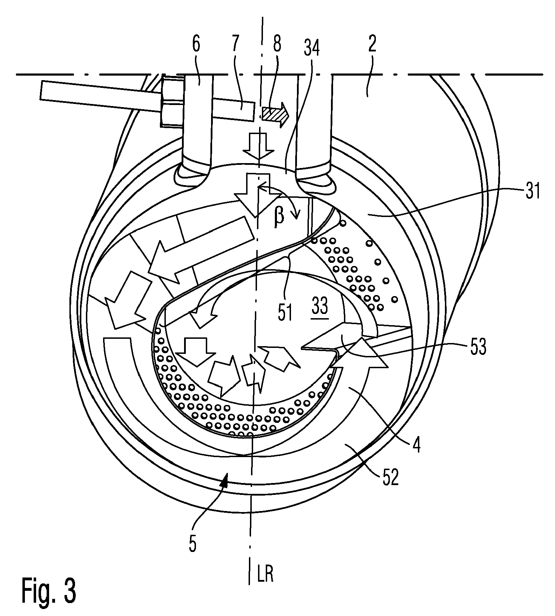

Die Mantelfläche 31 des Gehäuses 31 weist eine Einlassöffnung 34 für mit Reduktionsmittel 8 versetztes Abgas 4 auf, in welche ein Einlassrohr 6 mündet. Das Einlassrohr 6 ist ebenfalls aus Edelstahl gebildet und gasdicht mit der Mantelfläche 31 des Gehäuses 3 verschweißt. Die Längsachse LR des Einlassrohres 6 ist radial zur Längsachse LG des Gehäuses 3 angeordnet. In seinem Inneren nimmt das Einlassrohr 6 eine Einspritzdüse 7 für Reduktionsmittel 8 auf. Wie aus Figur 3 ersichtlich, weist die Einspritzdüse 7 gemäß einer Ausführungsform eine Düsenöffnung auf, die quer zum Einlassrohr 6 orientiert ist. Sofern das eingespritzte Reduktionsmittel nicht vorher verdampft, was neben der Geometrie im wesentlichen von der Tröpfchengröße und der Temperatur des Abgases abhängig ist, trifft das tröpfchenförmige Reduktionsmittel auf die Innenwand des Einlassrohres 6 und wird dort erhitzt und verspritzt.

Zwischen der Ringscheibe 331 und der ersten Stirnfläche 32 des Gehäuses 3 und damit über die ganze Längsachse LG des Gehäuses 3 erstreckt sich ein ebenfalls aus Edelstahl gebildetes Leitblech 5, welches gasdicht zwischen der Ringscheibe 331 und der ersten Stirnfläche 32 des Gehäuses 3 eingeklemmt ist. Das Leitblech 5 weist insgesamt die Form eines Spiralkonusstumpfes auf, bei dem Schnitte, die zur Konusachse senkrecht sind, jeweils Spiralen sind.

In Längsrichtung des Leitblechs 5 weist das Leitblech 5 einen Anfangsabschnitt 51 auf, der an seinem Ende parallel zur Längsachse LG des Gehäuses 3 verläuft und benachbart zur Einlassöffnung 34 gasdicht mit der Mantelfläche 31 des Gehäuses 3 verschweißt ist. Dieser Anfangsabschnitt 51 ist so angeordnet, dass eine Längsachse LR des Einlassrohres 6 das Leitblech 5 unter einem Winkel β von 65° schneidet, und ein zwischen dem Leitblech 5 und dem Gehäuse 3 gebildeter Strömungspfad einen Querschnitt von zwischen 8200 mm² (an der Stelle 42), 8550 mm² (an der Stelle 43) und 6050 mm² (an der Stelle 44 zu Beginn des Konusabschnitts 52) aufweist. Sofern das eingespritzte Reduktionsmittel nicht vorher verdampft, trifft das tröpfchenförmige Reduktionsmittel auf das Leitblech 5 und wird dort erhitzt und verspritzt.

Es wird betont, dass die vorliegende Erfindung nicht auf die vorstehende Anordnung und Orientierung des Einlassrohres 6 beschränkt ist. So ist es ausreichend, wenn die Längsachse LR des Einlassrohres 6 in einer Ebene angeordnet, auf der die Längsachse LG des Gehäuses 3 senkrecht steht. Weiter kann die Längsachse LR des Einlassrohres 6 das Leitblech 5 alternativ auch unter einem spitzen Winkel von beispielsweise kleiner 30° schneiden, so dass in dem Einlassrohr 6 geführtes Abgas weitgehend tangential auf das Leitblech 5 trifft. Weiter kann die Längsachse LR des Einlassrohres 6 das Leitblech 5 alternativ auch nicht schneiden, sondern beispielsweise tangential zum Leitblech 5 angeordnet sein, so dass in dem Einlassrohr 6 geführtes Abgas tangential an dem Leitblech 5 vorbeigeführt wird.

Der Anfangsabschnitt 51 geht in Längsrichtung des Leitblechs 5 unter einem Vorzeichenwechsel seiner Hauptkrümmung in einen Konusabschnitt 52 über, der ohne weitere Änderung des Vorzeichens der Hauptkrümmung in Längsrichtung des Leitblechs 5 in einem Endabschnitt 53 endet. In dem Konusabschnitt 52, der sich in der gezeigten Ausführungsform in Umfangsrichtung des Gehäuses 3 über 185° erstreckt, bildet das Leitblech 5 die Mantelfläche eines Kegelstumpfes, dessen Deckfläche der ersten Stirnfläche 32 des Gehäuses 3 zugewandt ist. Das Leitblech 5 weist an der Grundfläche des Konusabschnitts 52 einen Radius R2 auf, der dem halben Außendurchmesser DA der Ringscheibe 331 entspricht. In der gezeigten Ausführungsform ist das Leitblech 5 im Konusabschnitt 52 um einen Winkel α von 25° gegenüber der Längsachse LG des Gehäuses 3 geneigt. In dem Konusabschnitt 52 weist ein zwischen dem Leitblech 5 und dem Gehäuse 3 gebildeter Strömungspfad einen gegenüber dem Querschnitt im Anfangsabschnitt reduzierten Querschnitt von konstant 6050 mm² (an den Stellen 44, 45, 46)auf.

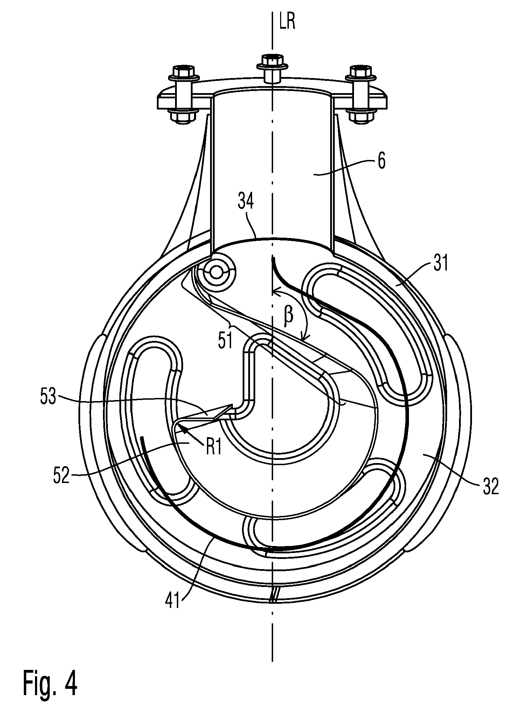

Wie besonders gut aus Figur 4 ersichtlich, beträgt eine Länge des zwischen Leitblech 5 und Gehäuse 3 entlang des Anfangsabschnitts 51 und des Konusabschnitts 52 des Leitblechs 5 gebildeten Strömungspfades 41 gemessen in einer Ebene, welche senkrecht auf die Längsachse LG des Gehäuses 3 steht, und diese halbiert, 480 mm.

Über einen Radius R1 von 5 mm geht der Konusabschnitt 52 in Längsrichtung des Leitblechs 5 in den Endabschnitt 53 über. Der Endabschnitt 53 ragt radial 127 mm in das Innere des Gehäuses 3 hinein. Somit ragt der Endabschnitt 53 über die Ringbreite der Ringscheibe 331 in das Innere des Gehäuses hinein, nicht hingegen in die zentrale Öffnung der Ringscheibe 331.

Somit wird dem in dem Strömungspfad 41 zwischen Leitblech 5 und Gehäuse 3 entlang des Anfangsabschnitts 51 und des Konusabschnitts 52 des Leitblechs 5 geführten Abgas 4 eine kreisförmige Bewegung eingeprägt, welche von dem Abgas 4 auch nach Verlassen des zwischen Leitblech 5 und Gehäuse 3 gebildeten Strömungspfades 41 im Bereich der Abrisskante zwischen dem Konusabschnitt 52 und dem Endabschnitt 53 des Leitblechs 5 zunächst beibehalten wird. Diese Bewegungsrichtung wird dadurch unterstützt, dass das Abgas 4 nach Verlassen des Strömungspfades 41 auf die der Mantelfläche 31 des Gehäuses 3 abgewandte Seite des Leitblechs 5 trifft, und so in radialer Richtung bezogen auf eine Längsachse LG des Gehäuses 3 wiederum vom Anfangsabschnitt 51 und Konusabschnitt 52 des Leitblechs 5 geführt wird. Diese Führung endet, wenn das Abgas 4 auf den radial in das Gehäuseinnere ragenden Endabschnitt 53 des Leitblechs 5 trifft. Am Endabschnitt 53 wird das Abgas 4 nochmals verwirbelt und radial in Richtung der Längsachse LG des Gehäuses 3 gezwungen, woraufhin das mit Reduktionsmittel 8 versetzte Abgas 4 das Gehäuse 3 über die an der zweiten Stirnfläche 33 angeordnete Ringscheibe 331 verlässt.

Um eine möglichst homogene Verteilung des Abgases über den gesamten Querschnitt der zweiten Stirnfläche 33 zu erreichen, sind die in die Ringscheibe 331 eingebrachten Löcher nicht gleichmäßig über die Ringscheibe 331 verteilt, sondern ungleichmäßig angeordnet. In einem ersten Abschnitt 332 der Ringscheibe, der im Gehäuse 3 in Umfangsrichtung an der selben Position angeordnet ist, wie der Konusabschnitt 52 des Leitblechs 5, und sich in Umfangsrichtung ebenfalls über 185° erstreckt, ist die Dichte der Löcher 334 mehr als doppelt so hoch, wie in einem von diesem ersten Abschnitt 332 der Ringscheibe 331 verschiedenen zweiten Abschnitt 333 der Ringscheibe.

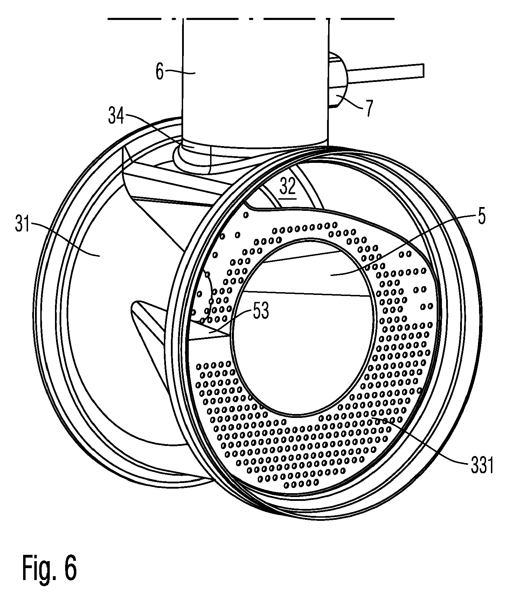

Hinsichtlich der Zusammenschau der Figuren 1 und 2 ist zu beachten, dass in Figur 2 die Ringscheibe 331 gegenüber der Darstellung in Figur 1 vertikal gespiegelt dargestellt ist, da in Figur 2 eine Aufsicht auf die Ringscheibe 331 ausgehend von dem SCR-Katalysator 2 dargestellt ist. Der in Umfangsrichtung der Ringscheibe 331 in Figur 2 von Löchern freie Abschnitt ist somit in Figur 1 an der Stelle angeordnet, an welchem der Endabschnitt 53 des Leitblechs 5 angeordnet ist. Dies ist gut aus einer Zusammenschau der Figuren 1 und 6 ersichtlich.

Im Folgenden wird unter Bezugnahme auf Figur 7 eine Abgasreinigungsanlage 9 für ein Kraftfahrzeug beschrieben, welche die vorstehend unter Bezug auf Figuren 1 bis 6 erläuterte Einströmkammer 1 verwendet. In Bezug auf die Einströmkammer 1 wird daher nur auf Unterschiede oder Besonderheiten eingegangen, und ansonsten auf die vorstehenden Ausführungen verwiesen.

Im Unterschied zu der in der Figur 3 gezeigten Ausführungsform wird in der Ausführungsform der Figur 7 eine Einspritzdüse 7' für Reduktionsmittel 8 verwendet, deren Düsenöffnung koaxial zur Längsachse LR des Einlassrohrs 6 orientiert ist.

Das in die Einlassöffnung 34 des Gehäuses 3 mündende Einlassrohr 6 ist mit einem (nicht gezeigten) Verbrennungsmotor des Kraftfahrzeugs in Fluidverbindung bringbar. Weiter ist in Strömungsrichtung des Abgases benachbart hinter der Einströmkammer 1 ein SCR-Katalysator 2 angeordnet.

Der SCR-Katalysator 2 weist insgesamt eine zylindrische Form auf und ist in der gezeigten Ausführungsform so angeordnet, dass seine Längsachse mit der Längsachse LG des Gehäuses 3 fluchtet. Dabei sind die Katalysatorelemente des SCR-Katalysator 2 um einen Abstand D von 81 mm von der an der zweiten Stirnfläche 33 des Gehäuses 3 angeordneten Ringscheibe 331 beabstandet. Die Einströmkammer 1 und der SCR-Katalysator 2 sind insoweit aufeinander abgestimmt, als der Radius R2 des Konusabschnitts 52 des Leitblechs 5 an seiner Grundfläche und damit an der zweiten Stirnfläche 33 des Gehäuses 3 nur 5 % kleiner als der Radius R3 der Katalysatorelemente des SCR-Katalysators 2 ist. Weiter ist der Außendurchmesser DA der an der zweiten Stirnfläche 33 des Gehäuses 3 angeordneten Ringscheibe 331 gleich dem Durchmesser DK der Katalysatorelemente des SCR-Katalysators 2 gewählt, und der Innendurchmesser DI der Ringscheibe ist gleich dem Radius R3 (und damit dem halben Durchmesser) der Katalysatorelemente des SCR-Katalysators 2 gewählt.

Diese Anpassung erlaubt eine über den gesamten Querschnitt gleichmäßige Beaufschlagung der Katalysatorelemente des Katalysators 2 mit Abgas 4, welches über die in dem Einlassrohr 6 angeordnete Einspritzdüse 7, 7' mit Reduktionsmittel 8 versetzt wurde.

## Patentansprüche

1. Einströmkammer (1) für einen Abgaskatalysator (2), aufweisend:
- ein zylindrisches Gehäuse (3) mit einer Mantelfläche (31) und zwei Stirnflächen (32, 33),
wobei die Mantelfläche (31) und eine erste Stirnfläche (32) aus einem Material gebildet sind, welches für Abgas (4) undurchlässig ist, und eine zweite Stirnfläche (33) für Abgas (4) zumindest partiell durchlässig ist, und
wobei die Mantelfläche (31) eine Einlassöffnung (34) für mit Reduktionsmittel (8) versetztes Abgas (4) aufweist; und
- ein in dem zylindrischen Gehäuse (3) angeordnetes Leitblech (5) aus einem für Abgas (4) undurchlässigen Material,
wobei sich das Leitblech (5) von der zweiten Stirnfläche (33) des Gehäuses (3) hin zu der ersten Stirnfläche (32) des Gehäuses (3) erstreckt, und wobei das Leitblech (5) in Umfangsrichtung des Gehäuses (3) einen Konusabschnitt (52) aufweist, in dem es die Mantelfläche eines Kegelstumpfes bildet, dessen Deckfläche der ersten Stirnfläche (32) des Gehäuses (3) zugewandt ist, und der sich in Umfangsrichtung des Gehäuses (3) über wenigstens 90° und insbesondere über wenigstens 135° und weiter insbesondere über mehr als 180° erstreckt;
**dadurch gekennzeichnet, dass**
sich der Konusabschnitt (52) des Leitblechs (5) in Umfangsrichtung des Gehäuses (3) über weniger als 330° und insbesondere über weniger als 300° und weiter insbesondere über weniger als 270° erstreckt.

2. Einströmkammer (1) nach Anspruch 1,
wobei das Leitblech (5) in Längsrichtung einen Anfangsabschnitt (51) aufweist, welcher benachbart zu der Einlassöffnung (34) über die ganze Längsachse (LG) des Gehäuses (3) zwischen der ersten und zweiten Stirnfläche (32,33) des Gehäuses (3) an die Mantelfläche (31) des Gehäuses (3) angrenzt und insbesondere mit dieser verbunden ist, und
wobei das Leitblech (5) in Längsrichtung einen Endabschnitt (53) aufweist, welcher sich unmittelbar an den Konusabschnitt (52) anschließt, und bezogen auf eine Längsachse (LG) des Gehäuses (3) radial in das Innere des Gehäuses (3) hineinragt.

3. Einströmkammer (1) nach Anspruch 2, wobei das Leitblech (5) an der Stoßstelle zwischen dem Konusabschnitt (52) und dem Endabschnitt (53) einen Radius (R1) kleiner 20 mm und insbesondere kleiner 10 mm und weiter insbesondere kleiner 5 mm aufweist.

4. Einströmkammer (1) nach Anspruch 2 oder 3, wobei das Leitblech (5) eine Hauptkrümmung aufweist, deren Vorzeichen sich in Längsrichtung des Leitblechs (5) zwischen dem Anfangsabschnitt (51) und dem Konusabschnitt (52) ändert und zwischen dem Konusabschnitt (52) und dem Endabschnitt (53) gleich bleibt.

5. Einströmkammer (1) nach einem der Ansprüche 1 bis 4, wobei die zweite Stirnfläche (33) aus einer Ringscheibe (331) aus einem Material gebildet ist, welches für Abgas (4) undurchlässig ist.

6. Einströmkammer (1) nach Anspruch 5,
wobei die Ringscheibe (331) einen ersten Abschnitt (332) aufweist, der sich in Umfangsrichtung über wenigstens 90° und insbesondere über wenigstens 135° und weiter insbesondere über mehr als 180° erstreckt, und in dem eine Vielzahl von Löchern (334) vorgesehen ist,
wobei die Ringscheibe (331) einen zweiten Abschnitt (333) aufweist, der sich in Umfangsrichtung über wenigstens 90° und insbesondere wenigstens 135° aber über weniger als 200° erstreckt, und in dem Löcher (334) vorgesehen sein können, und
wobei eine Dichte der Löcher (334) im zweiten Abschnitt (333) wenigstens 25 % und insbesondere wenigstens 40 % und weiter insbesondere wenigstens 60 % niedriger als im ersten Abschnitt (332) ist.

7. Einströmkammer (1) nach Anspruch 6,
wobei die von den Löchern (334) eingenommene Fläche insgesamt zwischen 4 % und 20 % und insbesondere zwischen 8 % und 16 % und weiter insbesondere 12 % der Oberfläche der Ringscheibe (331) in Umfangsrichtung einschließlich der Löcher (334) beträgt; und/oder
wobei die Löcher (334) einen Durchmesser von zwischen 2 mm und 6 mm und insbesondere zwischen 3 mm und 5 mm und weiter insbesondere von 4 mm aufweisen; und/oder
wobei die Ringscheibe (331) einen Außendurchmesser (DA) von zwischen 220 mm und 300 mm und insbesondere von zwischen 240 mm und 280 mm und weiter insbesondere von 262 mm aufweist; und/oder
wobei die Ringscheibe (331) einen Innendurchmesser (DI) von zwischen 70 mm und 190 mm und insbesondere von zwischen 100 mm und 160 mm und weiter insbesondere von 135 mm aufweist.

8. Einströmkammer (1) nach einem der Ansprüche 5 bis 7, wobei ein freies Endes des Endabschnitts (53) des Leitblechs (5) parallel zur Längsachse (LG) des Gehäuses (3) ausgebildet ist, und über eine maximale Länge radial in das Innere des Gehäuses (3) hineinragt, welche maximale Länge sich um weniger als 10 % und insbesondere um weniger als 5 % und weiter insbesondere um weniger als 3 % von der Differenz zwischen Außendurchmesser (DA) und Innendurchmesser (DI) der Ringscheibe (331) unterscheidet.

9. Einströmkammer (1) nach einem der Ansprüche 1 bis 8,
wobei die erste Stirnfläche (32) des Gehäuses (3) für Abgas (4) undurchlässig mit der Mantelfläche (31) des Gehäuses (3) verbunden ist, und/oder
wobei das Leitblech (5) für Abgas (4) undurchlässig an der ersten Stirnfläche (32) des Gehäuses (3) befestigt ist, und/oder
wobei die Verbindung des Anfangsabschnitts (51) des Leitblechs (5) an der Mantelfläche (31) des Gehäuses (3) für Abgas (4) undurchlässig ist; und/oder
wobei das Leitblech (5) für Abgas (4) undurchlässig mit der zweiten Stirnfläche (33) des Gehäuses (3) verbunden ist; und/oder
wobei das Leitblech (5) in dem Konusabschnitt (52) gegenüber einer Längsachse (LG) des Gehäuses (3) um einen Winkel (α) von wenigstens 5° und insbesondere wenigstens 15° und weiter insbesondere um wenigstens 25° geneigt ist.

10. Einströmkammer (1) nach einem der Ansprüche 1 bis 9,
weiter aufweisend ein an der Mantelfläche (31) des Gehäuses (3) im Bereich der Einlassöffnung (34) befestigtes Einlassrohr (6), dessen Längsachse (LR) auf der Längsachse (LG) des Gehäuses (3) senkrecht steht und das Leitblech (5) unter einem Winkel (β) von kleiner 90° und insbesondere kleiner 80° und weiter insbesondere kleiner 75° und größer 45° und insbesondere größer 55° und weiter insbesondere größer 60° schneidet, wobei in dem Einlassrohr (6) eine Einspritzdüse (7; 7') für Reduktionsmittel (8) angeordnet ist; oder
weiter aufweisend ein an der Mantelfläche (31) des Gehäuses (3) im Bereich der Einlassöffnung (34) befestigtes Einlassrohr (6), dessen Längsachse (LR) in einer Ebene angeordnet ist, auf der die Längsachse (LG) des Gehäuses (3) senkrecht steht und dessen Längsachse (LR) das Leitblech (5) unter einem Winkel (β) von kleiner 30° und insbesondere kleiner 20° und weiter insbesondere kleiner 10° schneidet oder nicht schneidet, wobei in dem Einlassrohr (6) eine Einspritzdüse (7; 7') für Reduktionsmittel (8) angeordnet ist.

11. Einströmkammer (1) nach Anspruch 10,
wobei die Einspritzdüse (7) wenigstens eine Düsenöffnung aufweist, welche radial zur Längsachse (LR) des Einlassrohres (6) orientiert ist; und/oder
wobei die Einspritzdüse (7') wenigstens eine Düsenöffnung aufweist, welche parallel zur Längsachse (LR) des Einlassrohres (6) orientiert ist.

12. Einströmkammer (1) nach einem der Ansprüche 1 bis 11,
wobei eine Länge eines zwischen Leitblech (5) und Gehäuse (3) entlang des Anfangsabschnitts (51) und des Konusabschnitts (52) des Leitblechs gebildeten Strömungspfades (41) in einer Ebene, welche senkrecht auf die Längsachse (LG) des Gehäuses 3 steht, und diese halbiert, zwischen 400 mm und 600 mm und insbesondere zwischen 450 mm und 550 mm und weiter insbesondere 480 mm beträgt; und/oder
wobei ein Querschnitt (42, 43) eines zwischen Leitblech (5) und Gehäuse (3) gebildeten Strömungspfades im Bereich des Anfangsabschnitts (51) um zwischen 25 % und 55 % und insbesondere um zwischen 35 % und 45 % größer als ein Querschnitt (44, 45) im Bereich des Konusabschnitts (52) ist; und/oder
wobei ein Querschnitt (44, 45) eines zwischen Leitblech (5) und Gehäuse (3) gebildeten Strömungspfades im Bereich des Konusabschnitts im Wesentlichen konstant ist.

13. Abgasreinigungsanlage (9) für ein Kraftfahrzeug, aufweisend:
eine Einströmkammer (1) nach einem der Ansprüche 1 bis 12, wobei die Einlassöffnung (34) des Gehäuses (3) mit einem Verbrennungsmotor des Kraftfahrzeugs in Fluidverbindung bringbar ist; und
einen SCR-Katalysator (2), welcher in Strömungsrichtung des Abgases benachbart hinter der Einströmkammer (1) angeordnet ist.

14. Abgasreinigungsanlage (9) nach Anspruch 13,
wobei der SCR-Katalysator (2) eine zylindrische Form aufweist und so angeordnet ist, dass eine Längsachse des SCR-Katalysators (2) mit einer Längsachse (LG) des Gehäuses (3) fluchtet oder zu dieser parallel angeordnet und um weniger als 10 % des Durchmessers des SCR-Katalysators (2) von dieser beabstandet ist; und/oder
wobei der SCR-Katalysator (2) um wenigstens 50 mm und insbesondere um wenigstens 70 mm und weiter insbesondere um 81 mm von der zweiten Stirnfläche (33) des Gehäuses (3) beabstandet ist; und/oder
wobei sich der Radius (R2) des Konusabschnitts (52) des Leitblechs (5) an seiner Grundfläche um weniger als 10 % und insbesondere um weniger als 5 % von dem Radius (R3) des SCR-Katalysators (2) unterscheidet; und/oder
wobei sich der Außendurchmesser (DA) der Ringscheibe (331) an der zweiten Stirnfläche (33) des Gehäuses (3) um weniger als 10 % und insbesondere um weniger als 5 % von dem Durchmesser (DK) des SCR-Katalysators (2) unterscheidet, und/oder
wobei sich der Innendurchmesser (DI) der Ringscheibe (331) an der zweiten Stirnfläche (33) des Gehäuses (3) um weniger als 10 % und insbesondere um weniger als 5 % von dem Radius (R3) des SCR-Katalysators (2) unterscheidet.

## Claims

1. An influx chamber (1) for an exhaust-gas catalytic converter (2), comprising:
- a cylindrical housing (3) having a side face (31) and two front faces (32, 33),
the side face (31) and a first front face (32) being made from a material impermeable to exhaust gases (4), and a second front face (33) being at least partially permeable to exhaust gases (4), and
the side face (31) including an inlet opening (34) for exhaust gases (4) loaded with a reducing agent (8); and
- a baffle (5) positioned in the cylindrical housing (3) and made from a material impermeable for exhaust gases (4),
the baffle (5) extending from the second front face (33) of the housing (3) towards the first front face (32) of the housing (3), and
the baffle (5) including, along its longitudinal direction, a cone section (52) where it forms the side face of a truncated cone, the cover face of which faces the first front face (32) of the housing (3), and which extends over at least 90°, and in particular at least 135°, and further in particular more than 180° along the circumferential direction of the housing (3); **characterized in that**
the cone section (52) of the baffle (5) extends along the circumferential direction of the housing (3) over less than 330°, and in particular over less than 300°, and further in particular over less than 270°.

2. The influx chamber (1) according to claim 1,
wherein the baffle (5) includes, along its longitudinal direction, an initial section (51) which, in the vicinity of the inlet opening (34) and along the whole of the longitudinal axis (LG) of the housing (3) between the first and second front face (32, 33) of the housing (3), abuts to and, in particular, is connected with the side face (31) of the housing (3), and
wherein the baffle (5) includes a final section (53), along its longitudinal direction, that directly joins the cone section (52) and protrudes radially with respect to a longitudinal axis (LG) of the housing (3) into the interior of the housing (3).

3. The influx chamber (1) according to claim 2, wherein a radius (R1) of the baffle (5) at the joint between the cone section (52) and the final section (53) is less than 20 mm, and in particular less than 10 mm, and further in particular less than 5 mm.

4. The influx chamber (1) according to claim 2 or 3, wherein the baffle (5) includes a main curvature the sign of which changes along the longitudinal direction of the baffle (5) between the initial section (51) and the cone section (52), but remains unchanged between the cone section (52) and the final section (53).

5. The influx chamber (1) according to one of claims 1 to 4, wherein the second front face (33) is formed by an annular disk (331) made from a material impermeable for exhaust gases (4).

6. The influx chamber (1) according to claim 5,
wherein the annular disk (331) includes a first section (332) extending in the circumferential direction over at least 90°, and in particular over at least 135°, and further in particular over more than 180° and having a plurality of holes (334) formed therein;
wherein the annular disk (331) includes a second section (333) extending in the circumferential direction over at least 90°, and in particular at least 135°, but over less than 200°, and possibly having holes (334) formed therein; and wherein the density of holes (334) in the second section (333) is at least 25 %, and in particular 40 %, and further in particular at least 60 % lower than in the first section (332).

7. The influx chamber (1) according to claim 6,
wherein the area occupied by the holes (334) is in total between 4 % and 20 %, and in particular between 8 % and 16 %, and further in particular 12 % of the surface of the annular disk (331) in the circumferential direction including the holes (334); and/or
wherein the holes (334) have a diameter of between 2 mm and 6 mm, and in particular of between 3 mm and 5 mm, and further in particular of 4 mm; and/or
wherein the annular disk (331) has an outer diameter (DA) of between 220 mm and 300 mm, and in particular of between 240 mm and 280 mm, and further in particular of 262 mm; and/or
wherein the annular disk (331) has an inner diameter (DI) of between 70 mm and 190 mm, and in particular of between 100 mm and 160 mm, and further in particular of 135 mm.

8. The influx chamber (1) according to one of claims 5 to 7, wherein a free end of the final section (53) of the baffle (5) is oriented in parallel to the longitudinal axis (LG) of the housing (3) and protrudes radially over a maximum length into the interior of the housing (3), which maximum length differs from the difference between the outer diameter (DA) and the inner diameter (DI) of the annular disk (331) by less than 10 %, and in particular less than 5 %, and further in particular less than 3%.

9. The influx chamber (1) according to one of claims 1 to 8,
wherein the first front face (32) of the housing (3) is connected to the side face (31) of the housing (3) in a manner impermeable to exhaust gases (4); and/or wherein the baffle (5) is connected to the first front face (32) of the housing (3) in a manner impermeable to exhaust gases (4); and/or
wherein the connection of the initial section (51) of the baffle (5) on the side face (31) of the housing (3) is impermeable for exhaust gases (4); and/or wherein the baffle (5) is connected to the second front face (33) of the housing (3) in a manner impermeable to exhaust gases (4); and/or
wherein in the cone section (52) the baffle (5) is inclined with respect to a longitudinal axis (LG) of the housing (3) by an angle (α) of at least 5°, and in particular of least 15°, and further in particular of at least 25°.

10. The influx chamber (1) according to one of claims 1 to 9, further comprising an inlet pipe (6) located at a side face (31) of the housing (3) in the area of the inlet opening (34), the longitudinal axis (LR) of which is perpendicular to the longitudinal axis (LG) of the housing (3) and intersects the baffle (5) at an angle (β) of less than 90°, and in particular less than 80°, and further in particular less than 75°, but more than 45°, and in particular more than 55°, and further in particular more than 60°, whereby an injection nozzle (7, 7') for a reducing agent (8) is located inside the inlet pipe (6); or
further comprising an inlet pipe (6) located at a side face (31) of the housing (3) in the area of the inlet opening (34), the longitudinal axis (LR) of which is located in a plane perpendicular to the longitudinal axis (LG) of the housing (3), and the longitudinal axis (LR) of which intersects the baffle (5) at an angle (β) of less than 30°, and in particular less than 20°, and further in particular less than 10°, or does not intersect the baffle (5) at all, whereby an injection nozzle (7, 7') for a reducing agent (8) is located inside the inlet pipe (6).

11. The influx chamber (1) according to claim 10,
wherein the injection nozzle (7) comprises at least one nozzle outlet oriented radially to the longitudinal axis (LR) of the inlet pipe (6); and/or
wherein the injection nozzle (7') comprises at least one nozzle outlet oriented in parallel to the longitudinal axis (LR) of the inlet pipe (6).

12. The influx chamber (1) according to one of claims 1 to 11,
wherein a length of a flow path (41) formed between the baffle (5) and the housing (3) along the initial section (51) and the cone section (52) of the baffle in a plane perpendicular to the longitudinal axis (LG) of the housing (3) and bisecting it is between 400 mm and 600 mm, and in particular between 450 mm and 550 mm, and further in particular 480 mm; and/or
wherein a cross section (42, 43) of a flow path formed between the baffle (5) and the housing (3) is in the region of the initial section (51) between 25 % and 55 %, and in particular between 35 % and 45 % greater than a cross section (44, 45) in the region of the cone section (52); and/or
wherein a cross section (44, 45) of a flow path formed between the baffle (5) and the housing (3) is substantially constant within the region of the cone section.

13. Emission control system (9) for a motor vehicle, comprising:
an influx chamber (1) according to one of claims 1 to 12, wherein the inlet opening (34) of the housing (3) is configured for being coupled to an internal combustion engine of the motor vehicle in a fluid communication; and
an SCR catalytic converter (2) disposed adjacent to the influx chamber (1) and disposed behind the influx chamber (1) with respect to the flow direction of the exhaust gases.

14. Emission control system (9) according to claim 13, wherein the SCR catalytic converter (2) has a cylindrical shape and is either disposed such that a longitudinal axis of the SCR catalytic converter (2) is aligned with a longitudinal axis (LG) of the housing (3) or in parallel to the longitudinal axis (LG) of the housing (3), and is spaced apart from the longitudinal axis (LG) of the housing (3) by less than 10 % of the diameter of the SCR catalytic converter (2); and/or
wherein the SCR catalytic converter (2) is spaced apart from the second front face (33) of the housing (3) by at least 50 mm, and in particular by at least 70 mm, and further in particular by 81 mm; and/or
wherein the radius (R2) of the cone section (52) of the baffle (5) differs at its base area from the radius (R3) of the SCR catalytic converter (2) by less than 10 %, and in particular by less than 5 %; and/or
wherein the outer diameter (DA) of the annular disk (331) at the second front face (33) of the housing (3) differs from the diameter (DK) of the SCR catalytic converter (2) by less than 10 %, and in particular by less than 5 %; and/or
wherein the inner diameter (DI) of the annular disk (331) at the second front face (33) of the housing (3) differs from the radius (R3) of the SCR catalytic converter (2) by less than 10 %, and in particular by less than 5 %.

## Revendications

1. Chambre d'entrée (1) pour un catalyseur de gaz d'échappement (2), présentant :
- un boîtier cylindrique (3) avec une surface enveloppe (31) et deux surfaces avant (32, 33),
la surface enveloppe (31) et une première surface avant (32) étant réalisées en un matériau qui est imperméable aux gaz d'échappement (4), et une seconde surface avant (33) étant perméable au moins en partie aux gaz d'échappement (4), et
la surface enveloppe (31) présentant une ouverture d'entrée (34) pour des gaz d'échappement (4) mélangés avec un agent de réduction (8) ; et
- une tôle de guidage (5) agencée dans le boîtier cylindrique (3) en un matériau imperméable aux gaz d'échappement (4),
la tôle de guidage (5) s'étendant de la seconde surface avant (33) du boîtier (3) vers la première surface avant (32) du boîtier (3) et
la tôle de guidage (5) présentant dans le sens périphérique du boîtier (3) une section de cône (52), dans laquelle elle forme la surface enveloppe d'un cône tronqué, dont la surface de recouvrement est tournée vers la première surface avant (32) du boîtier (3), et qui s'étend dans le sens périphérique du boîtier (3) sur au moins 90° et en particulier sur au moins 135° et encore en particulier sur plus de 180° ;
**caractérisée en ce que**
la section de cône (52) de la tôle de guidage (5) s'étend dans le sens périphérique du boîtier (3) sur moins de 330° et en particulier sur moins de 300° et encore en particulier sur moins de 270°.

2. Chambre d'entrée (1) selon la revendication 1,
la tôle de guidage (5) présentant dans le sens longitudinal une section de début (51) qui jouxte de manière contigüe à l'ouverture d'entrée (34) par le biais de l'axe longitudinal entier (LG) du boîtier (3) entre la première et seconde surface avant (32, 33) du boîtier (3) la surface enveloppe (31) du boîtier (3) et est reliée à celle-ci en particulier et
la tôle de guidage (5) présentant dans le sens longitudinal une section d'extrémité (53) qui se raccorde directement à la section de cône (52), et pénétrant par rapport à un axe longitudinal (LG) du boîtier (3) radialement à l'intérieur du boîtier (3).

3. Chambre d'entrée (1) selon la revendication 2, la tôle de guidage (5) présentant sur le joint entre la section de cône (52) et la section d'extrémité (53) un rayon (R1) inférieur à 20 mm et en particulier inférieur à 10 mm et encore en particulier inférieur à 5 mm.

4. Chambre d'entrée (1) selon la revendication 2 ou 3, la tôle de guidage (5) présentant une courbure principale, dont le sens se modifie dans le sens longitudinal de la tôle de guidage (5) entre la section de début (51) et la section de cône (52) et reste identique entre la section de cône (52) et la section d'extrémité (53).

5. Chambre d'entrée (1) selon l'une quelconque des revendications 1 à 4, la seconde surface avant (33) étant formée d'un disque annulaire (331) en un matériau qui est imperméable aux gaz d'échappement (4).

6. Chambre d'entrée (1) selon la revendication 5,
le disque annulaire (331) présentant une première section (332) qui s'étend dans le sens périphérique sur au moins 90° et en particulier sur au moins 135° et encore en particulier sur plus de 180° et dans laquelle une pluralité de trous (334) est prévue,
le disque annulaire (331) présentant une seconde section (333) qui s'étend dans le sens périphérique sur au moins 90° et en particulier au moins 135° mais sur moins de 200°, et dans lequel des trous (334) peuvent être prévus et
une densité des trous (334) dans la seconde section (333) étant au moins de 25 % et en particulier au moins de 40 % et encore en particulier au moins de 60 % plus faible que dans la première section (332).

7. Chambre d'entrée (1) selon la revendication 6,
la surface occupée par les trous (334) s'élevant dans l'ensemble entre 4 et 20 % et en particulier entre 8 et 16 % et encore en particulier à 12 % de la surface du disque annulaire (331) dans le sens périphérique y compris des trous (334) ; et/ou
les trous (334) présentant un diamètre entre 2 et 6 mm et en particulier entre 3 et 5 mm et encore en particulier de 4 mm ; et/ou
le disque annulaire (331) présentant un diamètre extérieur (DA) entre 220 et 300 mm et en particulier entre 240 et 280 mm et encore en particulier de 262 mm; et/ou
le disque annulaire (331) présentant un diamètre intérieur (DI) entre 70 et 190 mm et en particulier entre 100 et 160 mm et encore en particulier de 135 mm.

8. Chambre d'entrée (1) selon l'une quelconque des revendications 5 à 7, une extrémité libre de la section d'extrémité (53) de la tôle de guidage (5) étant réalisée parallèlement à l'axe longitudinal (LG) du boîtier (3), et pénétrant sur une longueur maximale radialement à l'intérieur du boitier (3), laquelle longueur maximale se distingue de moins de 10 % et en particulier de moins de 5 % et encore en particulier de moins de 3 % de la différence entre le diamètre extérieur (DA) et le diamètre intérieur (DI) du disque annulaire (331).

9. Chambre d'entrée (1) selon l'une quelconque des revendications 1 à 8,
la première surface avant (32) du boîtier (3) étant reliée de manière imperméable aux gaz d'échappement (4) à la surface enveloppe (31) du boîtier (3) et/ou
la tôle de guidage (5) étant fixée de manière imperméable aux gaz d'échappement (4) sur la première surface avant (32) du boîtier (3) et/ou
la liaison de la section de début (51) de la tôle de guidage (5) sur la surface enveloppe (31) du boîtier(3) étant imperméable aux gaz d'échappement (4) ; et/ou
la tôle de guidage (5) étant reliée de manière imperméable aux gaz d'échappement (4) à la seconde surface avant (33) du boîtier (3) et/ou
la tôle de guidage (5) étant inclinée dans la section de cône (52) par rapport à un axe longitudinal (LG) du boîtier (3) d'un angle (α) d'au moins 5° et en particulier d'au moins 15° et encore en particulier d'au moins 25°.

10. Chambre d'entrée (1) selon l'une quelconque des revendications 1 à 9,
présentant en outre un tube d'entrée (6) fixé sur la surface enveloppe (31) du boîtier (3) dans la zone de l'ouverture d'entrée (34), dont l'axe longitudinal (LR) se trouve perpendiculaire à l'axe longitudinal (LG) du boîtier (3) et coupant la tôle de guidage (5) selon un angle (β) inférieur à 90° et en particulier inférieur à 80° et encore en particulier inférieur à 75° et supérieur à 45° et en particulier supérieur à 55° et encore en particulier supérieur à 60°, une buse d'injection (7 ; 7') pour l'agent de réduction (8) étant agencée dans le tube d'entrée (6) ; ou
présentant en outre un tube d'entrée (6) fixé sur la surface enveloppe (31) du boîtier (3) dans la zone de l'ouverture d'entrée (34), dont l'axe longitudinal (LR) est agencé dans un plan, auquel l'axe longitudinal (LG) du boîtier (3) se trouve perpendiculaire et dont l'axe longitudinal (LR) coupe ou ne coupe pas la tôle de guidage (5) selon un angle (β) inférieur à 30° et en particulier inférieur à 20° et encore en particulier inférieur à 10°, une buse d'injection (7 ; 7') pour l'agent de réduction (8) étant agencée dans le tube d'entrée (6).

11. Chambre d'entrée (1) selon la revendication 10,
la buse d'injection (7) présentant au moins une ouverture de buse qui est orientée radialement à l'axe longitudinal (LR) du tube d'entrée (6) ; et/ou
la buse d'injection (7') présentant au moins une ouverture de buse qui est orientée parallèlement à l'axe longitudinal (LR) du tube d'entrée (6).

12. Chambre d'entrée (1) selon l'une quelconque des revendications 1 à 11,
une longueur d'une voie d'écoulement (41) formée entre la tôle de guidage (5) et le boîtier (3) le long de la section de début (51) et de la section de cône (52) de la tôle de guidage dans un plan qui se trouve perpendiculaire à l'axe longitudinal (LG) du boîtier 3 et le divise en deux, s'élevant entre 400 et 600 mm et en particulier entre 450 et 550 mm et encore en particulier à 480 mm ; et/ou
une section transversale (42, 43) d'une voie d'écoulement formée entre la tôle de guidage (5) et le boîtier (3) dans la zone de la section de début (51) étant entre 25 et 55 % et en particulier entre 35 et 45 % plus grande qu'une section transversale (44, 45) dans la zone de la section de cône (52) ; et/ou
une section transversale (44, 45) d'une voie d'écoulement formée entre la tôle de guidage (5) et le boîtier (3) étant sensiblement constante dans la zone de la section de cône.

13. Installation de nettoyage de gaz d'échappement (9) pour un véhicule automobile présentant :
une chambre d'entrée (1) selon l'une quelconque des revendications 1 à 12, l'ouverture d'entrée (34) du boîtier (3) pouvant être amenée en liaison fluidique avec un moteur à combustion interne du véhicule automobile ; et
un catalyseur SCR (2) qui est agencé dans le sens d'écoulement des gaz d'échappement de manière contiguë derrière la chambre d'entrée (1).

14. Installation de nettoyage de gaz d'échappement (9) selon la revendication 13,
le catalyseur SCR (2) présentant une forme cylindrique et étant agencé de sorte qu'un axe longitudinal du catalyseur SCR (2) s'aligne sur un axe longitudinal (LG) du boîtier (3) ou est agencé parallèlement à celui-ci et est espacé de celui-ci de moins de 10 % du diamètre du catalyseur SCR (2) ; et/ou
le catalyseur SCR (2) étant espacé d'au moins 50 mm et en particulier d'au moins 70 mm et encore en particulier de 81 mm de la seconde surface avant (33) du boîtier (3) et/ou
le rayon (R2) de la section de cône (52) de la tôle de guidage (5) se distinguant sur sa surface de base de moins de 10 % et en particulier de moins de 5 % du rayon (R3) du catalyseur SCR (2) et/ou
le diamètre extérieur (DA) de l'anneau annulaire (331) se distinguant sur la seconde surface avant (33) du boîtier (3) de moins de 10 % et en particulier de moins de 5 % du diamètre (DK) du catalyseur SCR (2) et/ou
le diamètre intérieur (DI) de l'anneau annulaire (331) se distinguant sur la seconde surface avant (33) du boîtier (3) de moins de 10 % et en particulier de moins de 5 % du rayon (R3) du catalyseur SCR (2).
